# EUROPÄISCHE PATENTSCHRIFT

(11) **EP 4 549 760 B1**
(45) Veröffentlichungstag und Bekanntmachung des Hinweises auf die Patenterteilung: **06.05.2026**
(21) Anmeldenummer: 23207164.7
(22) Anmeldetag: 31.10.2023
(51) Int. Cl.: F16B 43/00, H01R 4/30

(54) **KONTAKTSCHEIBE FÜR ELEKTRISCH LEITENDE VERBINDUNGEN**
CONTACT DISK FOR ELECTRICALLY CONDUCTIVE CONNECTIONS
DISQUE DE CONTACT POUR CONNEXIONS ÉLECTROCONDUCTRICES

(43) Veröffentlichungstag der Anmeldung: 07.05.2025
(73) Patentinhaber: TV Innovation GmbH & Co. KG, 58553 Halver (DE)
(72) Erfinder: Volborth, Thomas, 58553 Halver (DE)
(74) Vertreter: Patentanwälte Dörner & Kötter PartG mbB

(56) Entgegenhaltungen:
- DE-U1- 202020 101 633
- US-A- 1 911 384
- US-A1- 2022 106 976

## Beschreibung

Die Erfindung betrifft eine Kontaktscheibe für elektrisch leitende Verbindungen nach dem Oberbegriff des Patentanspruchs 1.

Kontaktscheiben werden in der Haus- und Gebäudetechnik als auch bei Kraft- und Schienenfahrzeugen für Erdungsanwendungen oder Überspannungsschutz auf lackierten, elektrisch leitenden Metallgegenlagen eingesetzt. Diese sind mit einer Verzahnung versehen, die durch einzelne am Außenumfang angeordnete Zähne gebildet ist, die sich bei Anziehen der Schraube in die elektrisch leitende Gegenlage eingraben und hierdurch eine zuverlässige elektrische Verbindung ausbilden sollen. In der DE 7220915 U1 ist beispielsweise eine Kontaktscheibe für eine Fahrzeugantenne beschrieben, die aus einer steifen ersten Metallscheibe gebildet ist, die einen kugelförmig geprägten Hals aufweist, an dessen Ansatz drei Zacken nach außen durchgeprägt sind. Beim Anziehen der Schraubverbindung schneiden die Zacken zur Kontaktverbesserung in das Karosserieblech eines Kraftfahrzeugs Ein anderes Beispiel einer Kontaktscheibe des Standes der Technik ist in der US 1911384 A offenbart.

Problematisch bei den heute bekannten Kontaktscheiben ist, dass diese oftmals eine auf der entsprechenden elektrisch leitenden Gegenlage, beispielsweise einem Karosserieteil befindliche Lackschicht nur unzureichend durchdringen, was zu Kontaktbeeinträchtigungen führen kann. Hinzu kommt, dass die elektrische Durchgängigkeit bei den bekannten Kontaktschreiben eingeschränkt ist, da die einzelnen, wenigen Zähne - in der Regel sind sechs Zähne angeordnet, welche die Kontaktpunkte bilden - nur einen geringen Anteil des Außendurchmessers der Kontaktscheibe umfassen. Darüber hinaus können durch unzureichend in die Gegenlage eingetriebene Zacken Hohlräume bilden, in die Wasser eindringen kann, wodurch die Gefahr von Korrosion gegeben ist. Weiterhin kann durch den entstandenen Spalt zwischen Lack und Kralle Feuchtigkeit an die blanken Oberflächen gelangen, wodurch ein erhöhtes Korrosionsrisiko besteht. Nicht zuletzt ist durch nicht vollständig in die Gegenlage eingetriebene Zähne eine flächige Auflage der Kontaktscheibe nicht gegeben, was zu Setz- und Kriecherscheinungen führt. Die Folge können Lockerungs- und Losdrehwirkungen sein, wodurch sowohl die mechanische Stabilität der Schraubenverbindung, als auch die Stromdurchgängigkeit beeinträchtigt ist.

Hier will die Erfindung Abhilfe schaffen. Der vorliegenden Erfindung liegt die Aufgabe zu Grunde, eine Kontaktscheibe für elektrisch leitende Verbindungen auf einer mit einer Lackschicht bedeckten, elektrisch leitenden Gegenlage, insbesondere einem Karosserieteil eines Kraftfahrzeugs bereitzustellen, bei der eine zuverlässige elektrische Kontaktierung gewährleistet ist und bei der die Korrosionsgefahr vermindert ist. Gemäß der Erfindung wird diese Aufgabe durch eine Kontaktscheibe mit den Merkmalen des kennzeichnenden Teils des Patentanspruchs 1 gelöst.

Mit der Erfindung ist eine Kontaktscheibe für elektrisch leitende Verbindungen auf einer mit einer Lackschicht bedeckten, elektrisch leitenden Gegenlage, insbesondere einem Karosserieteil eines Kraftfahrzeugs, bereitgestellt, bei der eine zuverlässige elektrische Kontaktierung gewährleistet ist und bei der eine Hohlraumbildung vermieden ist. Dadurch, dass der Scheibenkörper einen Querschnitt aufweist, der wenigstens zwei bogenförmige Abschnitte umfasst, die in Richtung der Außenkante des Scheibenkörpers abnehmende Steigungen aufweisen, ist beim Anziehen einer Schraubenverbindung eine Verschiebung der Scheibenunterseite entlang der elektrische leitenden Gegenlage bis zur flächigen Auflage erzielt. Dadurch, dass die Mittel durch wenigstens eine in Richtung der Außenkante der gewölbten Scheibenunterseite ausgestellte Kralle gebildet sind, ist im Zuge der Materialverschiebung der Scheibenunterseite ein Abschabeffekt bewirkt, bei den sich die Kralle durch den Lack in die elektrisch leitende Gegenlage eingräbt. Dabei wird Lack von der Gegenlage abgeschabt. Es ist ein unmittelbarer Kontakt zwischen der Kralle der Kontaktscheibe und der elektrisch leitenden Gegenlage erzielt.

In Weiterbildung der Erfindung sind die wenigstens zwei bogenförmigen Abschnitte kreisbogenförmig ausgebildet, wobei der Betrag der Radien der kreisbogenförmigen Abschnitte in Richtung der Außenkante des Scheibenkörpers abnimmt. Durch die Einstellung der Radien ist die Verschiebebewegung der Scheibenunterseite entlang der elektrisch leitenden Gegenlage einstellbar.

In Ausgestaltung der Erfindung weist die wenigstens eine Kralle einen bogenförmigen, vorzugsweise einen kreisbogenförmigen, bevorzugt einen kreisringförmigen Verlauf entlang der Scheibenunterseite auf. Hierdurch ist ein bogenförmig umlaufendes Eingraben der Kalle durch die Lackschicht in die Gegenlage erzielt, wodurch die elektrische Durchgängigkeit erhöht ist.

In weiterer Ausgestaltung der Erfindung ist der kreisbogenförmige Verlauf entlang der Scheibenunterseite exzentrisch zum Scheibenmittelpunkt ausgebildet. Hierdurch ist eine Drehhemmung der Scheibe beim Anziehen der Schraube erzielt.

In Weiterbildung der Erfindung sind wenigstens zwei Krallen mit einen kreisbogenförmigen oder kreisringförmigen Verlauf entlang der Scheibenunterseite mit unterschiedlichen Radien angeordnet. Hierdurch sind radial beabstandete Kontaktlinien erzielt, wodurch die Zuverlässigkeit des elektrischen Kontaktes weiter erhöht ist.

In Ausgestaltung der Erfindung weist die wenigstens eine Kralle einen in Ausstellrichtung rechteckförmigen oder dreieckförmigen Querschnitt auf. Hierdurch ist eine scharfe Kante erzielt, wodurch die Durchdringung der Lackschicht sowie das Eindringen in die elektrisch leitende Gegenlage unterstützt ist.

In weiterer Ausgestaltung der Erfindung ist die wenigstens eine Kralle beabstandet zur Außenkante des Scheibenkörpers angeordnet. Hierdurch ist der Einpressdruck der Krallen beim Anziehen der Schraube erhöht. Der Einpressdruck für die Krallen wird durch eine Druckspannung erzeugt, die geringer ist als die durch den Anziehvorgang entstehende Flächenpressung, da die Krallen beabstandet zum Schraubenkopf angeordnet sind. Durch die Anordnung der wenigstens einen Kralle beabstandet zur Außenkante des Scheibenkörpers wird der Einpressdruck und somit die Eindringtiefe der Kralle erhöht. Vorteilhaft beträgt der Abstand der wenigstens einen Kralle wenigstens ein Fünftel, bevorzugt wenigstens ein Viertel, besonders bevorzugt ein Drittel des Radius des Scheibenkörpers.

Gemäß der Erfindung ist axial beabstandet zu der wenigstens einen Kralle eine Einwölbung in dem Scheibenkörper angeordnet. Hierdurch ist ein Aufnahmevolumen für durch die Kralle abgeschabtes Lackmaterial gebildet. Durch die Verbringung des Lackmaterials in die Einwölbung ist eine Spaltbildung zwischen Scheibe und ebenem Leiter durch Lackpartikel verhindert. Einer Korrosion durch eindringendes Wasser ist so entgegengewirkt. Durch die hierdurch sichergestellte flächige Auflage der Kontaktschaube auf der Gegenlage ist weiterhin auch die mechanische Stabilität der Schraubenverbindung gewährleistet. Darüber hinaus ist durch die in die Einwölbung eingebrachte Lackschicht eine Dichtung zwischen Kontaktscheibe und ebenem elektrischen Leiter gebildet, wodurch einem Eindringen von Wasser weiter entgegengewirkt ist.

In Weiterbildung der Erfindung ist die Einwölbung schalenförmig, rinnenförmig ausgebildet. Hierdurch ist ein "Einrollen" einer durch die Kralle abgeschabten Lackschicht erzielt, wodurch die Dichtungswirkung verbessert ist.

In Ausgestaltung der Erfindung schließt sich die der Einwölbung zugewandte Seite der wenigstens einen Kralle unmittelbar an die Einwölbung an. Hierdurch ist eine vollständige Verbringung einer durch die Kralle abgeschabten Lackschicht in die Einwölbung unterstützt. Die abgeschabte Lackschicht kann über die durch die Unterseite der Kralle und die Einwölbung ausgebildete stufenfreie Gleitfläche sich einrollend in die Einwölbung hineingleiten. Hierdurch ist ein Abspalten von Lackpartikel vermieden, die sich zwischen Kontaktscheibe und Gegenlage positionieren und so zu einer Hohlraumbildung führen könnten.

In weiterer Ausgestaltung der Erfindung weist die der elektrisch leitenden Gegenlage abgewandte Scheibenoberseite eine Profilierung auf, die vorzugsweise als V- oder S-Profilierung oder schuppenartig ausgebildet ist. Hierdurch ist eine Sicherungswirkung einer Schraubverbindung durch Verkeilen mit der Unterseite eines Schraubenkopfes erzielt. Alternativ oder zusätzlich kann die der Gegenlage abgewandte Scheibenoberseite auch mit Zacken oder Noppen versehen sein.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Kontaktscheibe für elektrisch leitende Verbindungen;
- Figur 2: die schematische Darstellung einer elektrisch leitenden Verbindung vor dem Anziehen der Schraube (Karosserie angedeutet);
- Figur 3: eine Detaildarstellung der zwischen Schraubenkopf und Karosserie befindlichen Kontaktscheibe aus Figur 2 und
- Figur 4: die Darstellung der Verbindungsanordnung aus Figur 3 mit angezogener Schraube.

Die als Ausführungsbeispiel gewählte Kontaktscheibe ist aus C60-Federstahl hergestellt und umfasst einen im Wesentlichen ringförmig ausgebildeten Scheibenkörper 1, mit einer Scheibenoberseite 11 und einer Scheibenunterseite 12. Die Scheibenoberseite 11 ist mit einer - nicht dargestellten - Profilierung versehen, die im Ausführungsbeispiel schuppenartig ausgeführt ist. Die der elektrischen leitenden Gegenlage 4, vorliegend gebildet durch die Karosserie eines Kraftfahrzeuges, zugewandte Scheibenunterseite 12 der Kontaktscheibe ist gewölbt ausgebildet. Dabei ist die Querschnittskontur der gewölbten Scheibenunterseite 12 aus zwei ineinander übergehenden kreisbogenförmigen Abschnitten 13, 14 gebildet, wobei der erste, innere kreisbogenförmige Abschnitt 13 einen kleineren Radius aufweist, als der zweite, äußere kreisbogenförmige Abschnitt 14.

Im Übergangsbereich der beiden kreisbogenförmigen Abschnitts 13, 14 weist der Scheibenkörper 1 eine kreisringförmig auf der Scheibenunterseite 12 umlaufende Kralle 2 auf, die in Richtung der Außenkante der Scheibenunterseite 12 in einem spitzen Winkel ausgestellt ist. Die Kralle 2 weist im Ausführungsbeispiel einen dreieckige Querschnittskontur auf und ist im Abstand von etwa Zweidrittel des Radius des Scheibenkörpers 2 von der Außenkante der Kontaktscheibe angeordnet.

Axial beabstandet zu der ringförmig umlaufenden, nach außen ausgestellten Kralle 2 ist in den Scheibenkörper 1 eine ringförmig umlaufende, rinnenförmige Einwölbung 3 mit kreisbogenförmigem Querschnitt eingebracht. Die der Einwölbung 3 zugewandte Unterseite der Kralle 2 schließt sich unmittelbar an die Einwölbung 3 an, sodass sich die Innenmantelfläche der Einwölbung 3 mit der Fläche der Unterseite der Kralle 2 zu einer stufenlosen Gleitfläche ergänzt.

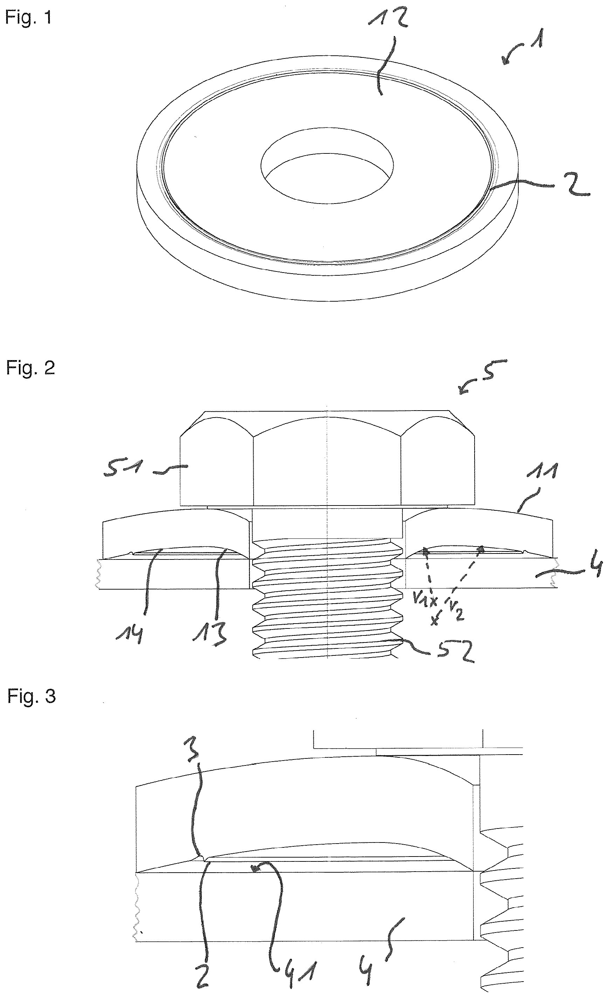

In Figur 2 ist die Anordnung einer erfindungsgemäßen Kontaktscheibe zur Herstellung einer elektrisch leitenden Verbindung schematisch skizziert. Hierbei ist eine Schraube 5 durch den Scheibenkörper 1 einer Kontaktscheibe sowie eine Bohrung 41 einer mit einer dünnen Lackschicht 41 versehenen Gegenlage 4 geführt. Die mit der Lackschicht 41 versehene Gegenlage 4 ist vorliegend durch die Karosserie eines Kraftfahrzeuges gebildete.

In Figur 2 ist die Schraube 5 nicht angezogen, d.h., die Kontaktscheibe befindet sich im unverspannten Zustand. Hierbei liegt die Kontaktscheibe mit ihrer Außenkante auf der Gegenlage 4 auf. Beim Anziehen der Schraube 5 wird der Scheibenkörper 1 mit der kreisringförmig umlaufenden Kralle 2 gegen die Gegenlage 4 gepresst, wobei die beiden kreisbogenförmigen Abschnitte 13, 14 der Scheibenunterseite zunehmend abgeflacht werden. Durch die unterschiedlichen Radien r1, r2 der beiden kreisbogenförmigen Abschnitte 13, 14 erfolgt eine Verschiebung der Fläche der Scheibenunterseite 12 mit der an dieser angeordneten Kralle 2 relativ zur Gegenlage 4 nach außen. Durch die Wahl der Radien r1, r1 der beiden Abschnitte 13, 14 ist die nach außen gerichtete Bewegung der Scheibenunterseite 12 relativ zur Gegenlage 4 einstellbar.

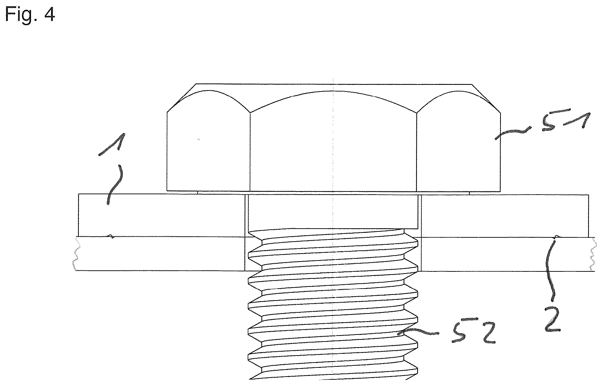

Durch die sich nach außen bewegende Kralle 2 wird diese unter Abschaben der Lackschicht 41 in die Gegenlage 4 gepresst, wodurch ein elektrischer Kontakt zwischen der Kralle 2 und der elektrisch leitenden Gegenlage 4 erfolgt (vgl. Figur 4). Die abgeschabte Lackschicht 41 wird hierbei in die rinnenartige Einwölbung 3 gerollt, wodurch eine O-Ring-förmige Dichtung erzielt ist. In dem Fall, dass sich die Kralle 2 nicht vollständig in die Gegenlage 4 eingräbt, wird der verbleibende Abschnitt der Kralle 2 durch den Anpressdruck des Schraubenkopfes 51 ebenfalls in die rinnenartige Einwölbung 3 verbracht, wodurch eine flächige Anlage der Kontaktscheibe an die Gegenlage 4 gewährleistet ist. Durch die abgeschabte Lackschicht ist die Kontaktstelle zwischen Kralle 2 und Gegenlage 3 abgedichtet. Durch die flächige Anlage der Scheibenunterseite 12 des Scheibenkörpers 1 an die Gegenlage 4 sind Hohlräume vermieden. Einer Korrosionsgefahr ist hierdurch wirksam entgegengewirkt.

## Patentansprüche

1. Kontaktscheibe für elektrisch leitende Verbindungen zur Anordnung auf einer mit einer Lackschicht (41) bedeckten elektrisch leitenden Gegenlage (4), insbesondere einem Karosserieteil eines Kraftfahrzeugs, umfassend einen ringförmigen, konkav gewölbten Scheibenkörper (1), an dessen der Gegenlage (4) zugewandten Scheibenunterseite (12) Mittel zur Durchdringung der Lackschicht (41) angeordnet sind, wobei der Scheibenkörper (1) einen Querschnitt aufweist, der wenigstens zwei bogenförmige Abschnitte (13, 14) umfasst, die in Richtung der Außenkante des Scheibenkörpers (1) abnehmende Steigungen aufweisen, wobei die Mittel durch wenigstens eine in Richtung der Außenkante der gewölbten Scheibenunterseite (12) ausgestellte Kralle (2) gebildet sind, **dadurch gekennzeichnet, dass** axial beabstandet zu der wenigstens einen Kralle (2) eine Einwölbung (3) in dem Scheibenkörper (1) angeordnet ist.

2. Kontaktscheibe nach Anspruch 1, **dadurch gekennzeichnet, dass** die wenigstens zwei bogenförmigen Abschnitte (13, 14) kreisbogenförmig ausgebildet sind, wobei der Betrag der Radien (r1, r2) der kreisbogenförmigen Abschnitte (13, 14) in Richtung der Außenkante des Scheibenkörpers (1) abnimmt.

3. Kontaktscheibe nach Anspruch 1 oder 2, **dadurch gekennzeichnet, dass** die wenigstens eine Kralle (2) einen bogenförmigen, vorzugsweise einen kreisbogenförmigen, bevorzugt einen kreisringförmigen Verlauf entlang der Scheibenunterseite (12) aufweist.

4. Kontaktscheibe nach Anspruch 3, **dadurch gekennzeichnet, dass** der kreisbogenförmige Verlauf der Kralle (2) entlang der Scheibenunterseite (12) exzentrisch zum Scheibenmittelpunkt ausgebildet ist.

5. Kontaktscheibe nach Anspruch 3 oder 4, **dadurch gekennzeichnet, dass** wenigstens zwei Krallen (2) mit einen kreisbogenförmigen oder kreisringförmigen Verlauf entlang der Scheibenunterseite (12) mit unterschiedlichen Radien angeordnet sind.

6. Kontaktscheibe nach einem der vorgenannten Ansprüche, **dadurch gekennzeichnet, dass** die wenigstens eine Kralle (2) einen in Ausstellrichtung rechteckförmigen oder dreieckförmigen Querschnitt aufweist.

7. Kontaktscheibe nach einem der vorgenannten Ansprüche, **dadurch gekennzeichnet, dass** die wenigstens eine Kralle (2) beabstandet zur Außenkante des Scheibenkörpers (1) angeordnet ist, wobei der Abstand zur Außenkante bevorzugt wenigstens ein Fünftel, besonders bevorzugt wenigstens ein Viertel des Radius des Scheibenkörpers (1) beträgt.

8. Kontaktscheibe nach einem der vorgenannten Ansprüche, **dadurch gekennzeichnet, dass** die Einwölbung (3) schalenförmig, bevorzugt rinnenförmig ausgebildet ist.

9. Kontaktscheibe nach einem der vorgenannten Ansprüche, **dadurch gekennzeichnet, dass** die der Einwölbung (3) zugewandte Seite der wenigstens einen Kralle (2) sich unmittelbar an die Einwölbung (3) anschließt.

10. Scheibe nach einem der vorgenannten Ansprüche, **dadurch gekennzeichnet, dass** die der Gegenlage (4) abgewandte Scheibenoberseite (11) eine Profilierung aufweist, die vorzugsweise als V- oder S-Profilierung oder schuppenartig ausgebildet ist.

11. Scheibe nach einem der vorgenannten Ansprüche, **dadurch gekennzeichnet, dass** die der Gegenlage (4) abgewandte Scheibenoberseite (11) mit Zacken oder Noppen versehen ist.

## Claims

1. Contact disc for electrically conductive connections for arrangement on an electrically conductive counter-layer (4) covered in a paint layer (41), specifically a body part of a motor vehicle, comprising an annular, concavely curved disc body (1) on the disc bottom (12) of which that faces the counter-layer (4) means for penetrating the paint layer (41) are arranged, wherein the disc body (1) has a cross-section that comprises at least two arched sections (13, 14) that have reducing gradients in the direction of the outer edge of the disc body (1), wherein the means are formed by at least one claw (2) protruding in the direction of the outer edge of the curved disc bottom (12), **characterised in that** a concavity (3) is arranged in the disc body (1) at an axial distance from the at least one claw (2).

2. Contact disc in accordance with claim 1, **characterised in that** the at least two arched sections (13, 14) are formed as a circular arc, wherein the size of the radii (r1, r2) of the circular-arc-shaped sections (13, 14) reduces in the direction of the outer edge of the disc body (1).

3. Contact disc according to one of claims 1 or 2, **characterised in that** the at least one claw (2) has an arched, preferably a circular-arc-shaped, more preferably a circular-ring-shaped progression along the disc bottom (12).

4. Contact disc in accordance with claim 3, **characterised in that** the circular-arc-shaped progression of the claw (2) is formed eccentric to the disc centre along the disc bottom (12).

5. Contact disc according to one of claims 3 or 4, **characterised in that** at least two claws (2) with a circular-arc- or circular-ring-shaped progression are arranged along the disc bottom (12) with different radii.

6. Contact disc in accordance with one of the preceding claims, **characterised in that** the at least one claw (2) has a rectangular or triangular cross-section in the protrusion direction.

7. Contact disc in accordance with one of the preceding claims, **characterised in that** the at least one claw (2) is arranged at a distance from the outer edge of the disc body (1), wherein the distance from the outer edge preferably is at least one fifth, particularly preferably one quarter of the radius of the disc body (1).

8. Contact disc in accordance with one of the preceding claims, **characterised in that** the concavity (3) is formed dish-shaped, preferably channel-shaped.

9. Contact disc in accordance with one of the preceding claims, **characterised in that** the side of the at least one claw (2) that faces the concavity (3) follows immediately on the concavity (3).

10. Disc in accordance with one of the preceding claims, **characterised in that** the disc top (11) that faces away from the counter-layer (4) has a profiling that is preferably formed as V- or S-profiling or scaled.

11. Disc in accordance with one of the preceding claims, **characterised in that** the disc top (11) that faces away from the counter-layer (4) is provided with prongs or nubs.

## Revendications

1. Disque de contact pour connexions électroconductrices destiné à être disposé sur une couche antagoniste (4) électroconductrice recouverte d'une couche de laque (41), en particulier sur une pièce de carrosserie de véhicule motorisé, comprenant un corps (1) de disque annulaire concave, sur le dessous (12) duquel regardant la couche antagoniste (4) sont disposés des moyens destinés à traverser la couche de laque (41), sachant que le corps (1) du disque présente une section comprenant au moins deux segments (13, 14) de forme arquée qui présentent des pentes allant en diminuant en direction du bord extérieur du corps (1) de disque, sachant que ces moyens sont formés par au moins une griffe (2) orientée en direction du bord extérieur du dessous (12) incurvé du disque, **caractérisé en ce qu'**à une distance axiale d'au moins une griffe (2) est disposée une incurvation (3) dans le corps (1) du disque.

2. Disque de contact selon la revendication 1, **caractérisé en ce qu'**au moins deux segments (13, 14) de forme arquée sont configurés en forme d'arc de cercle, sachant que la valeur des rayons (r1, r2) des segments (13, 14) en forme d'arc de cercle va en diminuant en direction du bord extérieur du corps (1) de disque.

3. Disque de contact selon la revendication 1 ou 2, **caractérisé en ce qu'**au moins une griffe (2) présente un tracé de forme arquée, de préférence en forme d'arc de cercle, de préférence un tracé en forme d'anneau circulaire le long du dessous (12) du disque.

4. Disque de contact selon la revendication 3, **caractérisé en ce que** le tracé en forme d'arc de cercle de la griffe (2) est configuré, le long du dessous (12) du disque, excentrique par rapport au centre du disque.

5. Disque de contact selon la revendication 3 ou 4, **caractérisé en ce qu'**au moins deux griffes (2) ayant un tracé en forme d'arc de cercle ou en forme d'anneau circulaire sont disposées avec des rayons différents le long du dessous (12) du disque.

6. Disque de contact selon l'une des revendications précédentes, **caractérisé en ce qu'**au moins une griffe (2) présente, en direction orientée vers l'extérieur, une section rectangulaire ou triangulaire.

7. Disque de contact selon l'une des revendications précédentes, **caractérisé en ce qu'**au moins une griffe (2) est disposée distante du bord extérieur du corps (1) de disque, sachant que l'écart par rapport au bord extérieur représente de préférence au moins un cinquième, de manière particulièrement préférentielle au moins un quart du rayon du corps (1) de disque.

8. Disque de contact selon l'une des revendications précédentes, **caractérisé en ce que** l'incurvation (3) est configurée en forme de coque, de préférence en forme de rigole.

9. Disque de contact selon l'une des revendications précédentes, **caractérisé en ce que** le côté - regardant l'incurvation (3) - d'au moins une griffe (2) jouxte directement l'incurvation (3).

10. Disque selon l'une des revendications précédentes, **caractérisé en ce que** le dessus (11) du disque ne regardant pas la couche antagoniste (4) présente un profil configuré de préférence comme un profil en V ou en S ou en écailles.

11. Disque selon l'une des revendications précédentes, **caractérisé en ce que** le dessus (11) du disque ne regardant pas la couche antagoniste (4) est muni de dents ou de picots plats.
